# EUROPEAN PATENT SPECIFICATION

(11) **EP 3 902 299 B1**
(45) Date of publication and mention of the grant of the patent: **19.06.2024**
(21) Application number: 20171423.5
(22) Date of filing: 24.04.2020
(51) Int. Cl.: H04L 9/40, H04W 12/037, H04W 12/0431

(54) **APPARATUS, METHOD, AND COMPUTER PROGRAM**
GERÄT, METHODE UND COMPUTERPROGRAMM
APPAREIL, PROCÉDÉ ET PROGRAMME INFORMATIQUE

(43) Date of publication of application: 27.10.2021
(73) Proprietor: Nokia Technologies Oy, 02610 Espoo (FI)
(72) Inventor: Casati, Alessio, West Molesey, Surrey KT8 1WT (GB)
(74) Representative: Script IP Limited

(56) References cited:
- WO-A1-2018/231125
- WO-A1-2020/060871

## Description

### Field of the disclosure

The present disclosure relates to an apparatus, a method, and a computer program and in particular but not exclusively for apparatus, methods and computer programs for providing encrypted messages.

### Background

A communication system can be seen as a facility that enables communication sessions between two or more entities such as communication devices, base stations/access points and/or other nodes by providing carriers between the various entities involved in the communications path. A communication system can be provided for example by means of a communication network and one or more compatible communications devices.

Access to the communication system may be via an appropriate communications device or terminal. A communications device is provided with an appropriate signal receiving and transmitting apparatus for enabling communications, for example enabling access to a communication network or communications directly with other communications device. The communications device may access a carrier provided by a station or access point, and transmit and/or receive communications on the carrier.

The communication system and associated devices typically operate in accordance with a given standard or specification which sets out what the various entities associated with the system are permitted to do and how that should be achieved.

WO2020/060871A1 discloses systems and methods of protecting an initial NAS message. Depending on whether a security context for a serving PLMN is stored, the UE uses either a public key from the serving PLMN or a key from the security context to encrypt parts of the initial NAS message. An initial NAS message containing the encrypted parts is then sent to an AMF of the serving PLMN. The serving PLMN public key is transmitted via a SIB. Prior to transmission of the initial NAS message or in parallel with it, an RRC message is sent to the base station. The RRC message contains the UE identifier and/or a NSSAI encrypted using the serving PLMN public key.

WO2018/231125A1 discloses a communication device, network node and methods for handling network slices in a wireless communication network. The communication device encrypts Network Slice Selection Assistance information, NSSAI, using public key cryptography and includes the encrypted NSSAI in a Non Access Stratum, NAS, registration request. Then the communication device sends a Radio Resource Control, RRC, request to the network node including the NAS registration request. The network node receives the RRC connection request from the communication device and selects a network function based on information in the RRC connection request. The network node forwards the NAS registration request to the network function and forwards to the communication device a NAS registration response received from the network function after the network function decrypting the NSSAI using a PLMN private key.

### Summary

The invention is defined by the independent claims. Preferred embodiments are set out in the dependent claims.

### Brief Description of the Figures

Embodiments will now be described, by way of example only, with reference to the accompanying Figures in which:
Figure 1 shows a schematic diagram of an example communication system comprising a plurality of base stations and a communication device;
Figure 2 shows a schematic diagram of an example mobile communication device;
Figure 3 shows a schematic diagram of an example apparatus provided in a network entity;
Figure 4 shows a schematic representation of a non-volatile memory medium storing instructions which when executed by a processor allow a processor to perform one or more of the procedures of the method of some embodiments;
Figure 5 shows an example apparatus which may be provided in a device or server or access point;
Figure 6 shows an example RRC connection setup procedure; and
Figures 7 to 10 show various methods according to some example embodiments.

### Description

Wireless systems may be divided into cells, and are therefore often referred to as cellular systems. Typically, an access point such as a base station provides at least one cell. The cellular system can support communications between user equipment (UE).

In the following, different exemplifying embodiments will be described using, as an example of an access architecture to which the embodiments may be applied. However embodiments are not limited to such an architecture. Some examples of other non-limiting options for suitable systems are the universal mobile telecommunications system (UMTS) radio access network (UTRAN or E-UTRAN), long term evolution (LTE), LTE-A (LTE advanced). wireless local area network (WLAN or Wi-Fi), worldwide interoperability for microwave access (WiMAX), Bluetooth^{®}, personal communications services (PCS), ZigBee^{®}, wideband code division multiple access (WCDMA), systems using ultra-wideband (UWB) technology, sensor networks, mobile ad-hoc networks (MANETs), cellular internet of things (IoT) RAN and Internet Protocol multimedia subsystems (IMS) or any combination thereof.

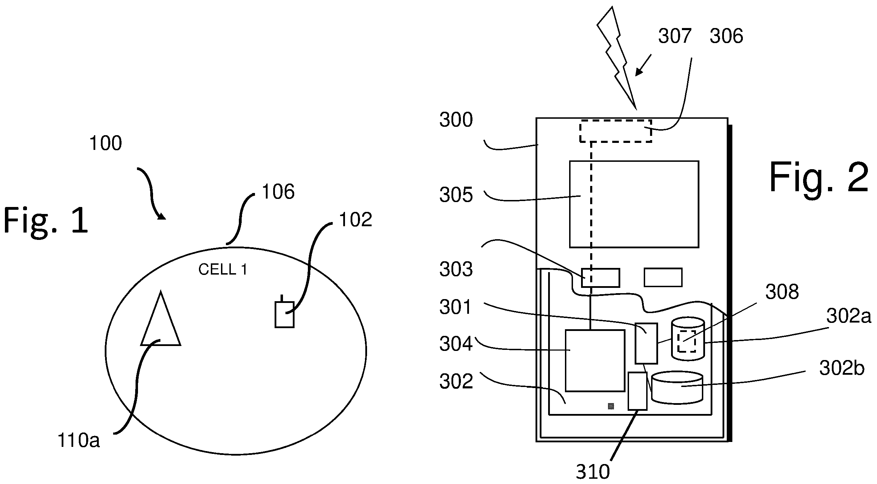

Figure 1 shows a cell of a wireless communication system 100. The cell is part of a public land mobile network PLMN. A PLMN is typically made up of a number of cells. As can be seen a communications device 102 is served by cell 1 106 which is provided by a first base station 110a which may be a gNB (a 5G base station).

The communication devices may be any suitable communications device. The communications devices have a wireless connection to a base station or other access point.

Figure 2 illustrates an example of a communications device 300, such as the wireless communications device 102 shown on Figure 1. The wireless communications device 300 may be provided by any device capable of sending and receiving radio signals. Non-limiting examples comprise a mobile station (MS) or mobile device such as a mobile phone or what is known as a 'smart phone', a computer provided with a wireless interface card or other wireless interface facility (e.g., USB dongle), personal data assistant (PDA) or a tablet provided with wireless communication capabilities, machine-type communications (MTC) devices, IoT type communications devices or any combinations of these or the like. The communications device may be provided as part of another device.

The device 300 may receive signals over an air or radio interface 307 via appropriate apparatus for receiving and may transmit signals via appropriate apparatus for transmitting radio signals. In Figure 2 transceiver apparatus is designated schematically by block 306. The transceiver apparatus 306 may be provided for example by means of a radio part and associated antenna arrangement. The antenna arrangement may be arranged internally or externally to the communications device.

The wireless communications device 300 may be provided with at least one processor 301 and at least one memory. The at least one memory may comprise at least one ROM 302a and/or at least one RAM 302b. The communications device may comprise other possible components 303 for use in software and hardware aided execution of tasks it is designed to perform, including control of access to and communications with access systems and other communications devices. The at least one processor 301 is coupled to the at least one memory. The at least one processor 301 may be configured to execute an appropriate software code 308 to implement one or more of the following aspects. The software code 308 may be stored in the at least one memory, for example in the at least one ROM 302a.

A geo-position sensor 310 may optionally be provided for determining the geo-location of the communications device. This may use a satellite positioning technology and/or any other suitable technology. In some embodiments, the sensor may alternatively or at least partially provided by the at least one processor. Alternatively or additionally, the sensor may be provided by suitable hardware or circuitry.

The processor, storage and other relevant control apparatus can be provided on an appropriate circuit board and/or in chipsets. This feature is denoted by reference 304.

The device may optionally have a user interface such as key pad 305, touch sensitive screen or pad, combinations thereof or the like.

Optionally one or more of a display, a speaker and a microphone may be provided depending on the type of the device.

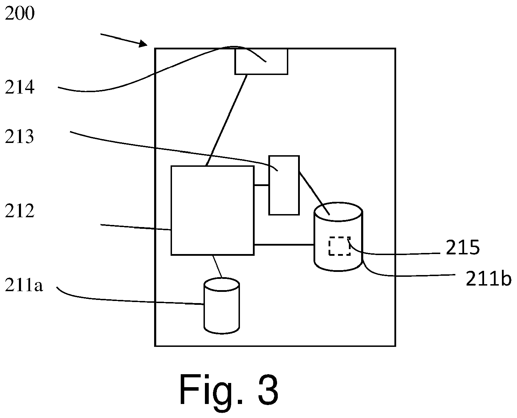

An example apparatus is shown in Figure 3. Figure 3 shows an example of an apparatus 200 for a radio access network entity such as a gNB or access node. The apparatus comprises at least one memory. The at least one memory may be at least one random access memory (RAM) 211a and/or at least one read only memory (ROM) 211b, at least one processor 212, 213 and an input/output interface 214. The at least one processor 212, 213 is coupled to the RAM 211a and the ROM 211b. The at least one processor 212, 213 may be configured to execute an appropriate software code 215 to implement one or more of the following aspects. The software code 215 may be stored in the ROM 211b.

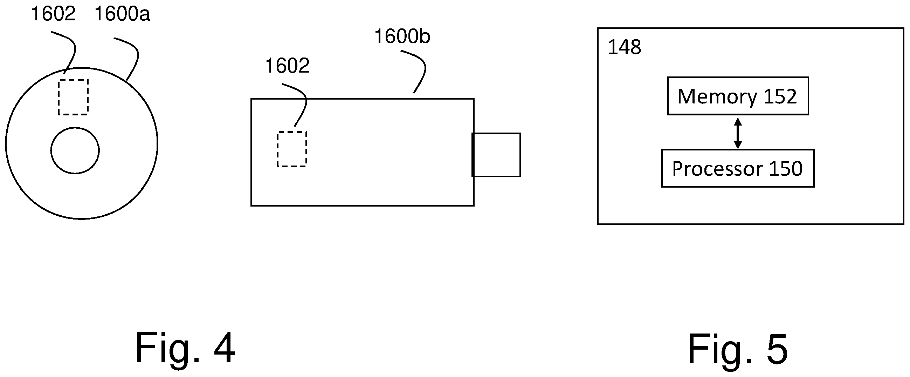

Figure 4 shows a schematic representation of non-volatile memory media 1600a (e.g. computer disc (CD) or digital versatile disc (DVD)) and 1600b (e.g. universal serial bus (USB) memory stick) storing instructions and/or parameters 1602 which when executed by a processor allow the processor to perform any of the methods of any of the embodiments or a part of any of the methods of any of the embodiments.

Figure 5 shows an apparatus 148. The apparatus 148 may be provided in a device and/or a server and/or an access node and/or in a communications device. The apparatus may comprise at least processor 150 and at least one memory 152 including computer code for one or more programs. This apparatus may be configured to cause some embodiments to be performed.

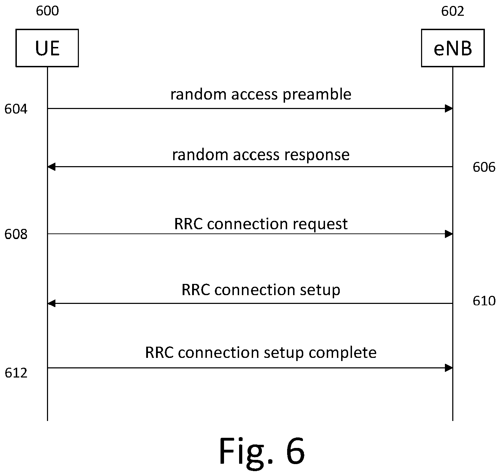

When a user equipment (UE) enters an area served by a cell, the UE may perform a RRC connection setup procedure in order for the UE to gain access to the wireless network resources provided by the cell. An example RRC connection setup procedure is described in Figure 6.

At step 604, the UE 600 sends a random access preamble to the eNB 602 via a random access channel.

At step 606, the eNB sends a random access response to the UE 600. The random access response may carry information to synchronize UE transmission timings, and information about uplink resources for the UE to utilize.

At step 608, the UE 600 sends a RRC connection request to the eNB 602 based on the information contained in the random access response received by the UE in step 606.

At step 610, the eNB 602 sends a RRC connection setup message to the UE 600. The RRC connection setup message may carry configuration parameters for the UE to use when transmitting subsequent messages.

At step 612, the UE 600 sends a RRC connection setup complete message to the eNB 602. The RRC connection setup complete message may comprise non-access stratum (NAS) layer information specific to the UE. The UE may then move to RRC Connected mode.

With a method such as that described with reference to Figure 6, the UE may establish a connection with the network for the UE to utilize for subsequent message transmission. However, in some cases, confidential information may be transmitted, as the messages sent during the RRC connection setup procedure are not encrypted.

For example, the RRC connection request message sent at step 608 or the RRC connection setup complete message sent at step 612 may not be encrypted, and thus may not be secure. As such, confidential information such as the UE specific NAS layer information may not be secure.

Some methods may seek to address this problem by encrypting at least part of the RRC connection request message and/or the RRC connection setup complete message using some form of public key encryption. However, these methods may suffer from two issues: firstly, the communication signalling involved increases signalling overhead; and secondly the public key may be provided per access node, and as such when a UE is moving between access nodes, a new key needs to be determined each time, which may be unnecessary.

Some embodiments seek to address these problems.

In some example embodiments, a public key is shared by access nodes and/or cells in a same public land mobile network (PLMN).

The following example embodiments assume that the UE has already determined a public key shared by access nodes and/or cells within a PLMN (hereafter referred to as a "PLMN public key"). Some embodiments relate to performing RRC connection setup procedure using the PLMN public key.

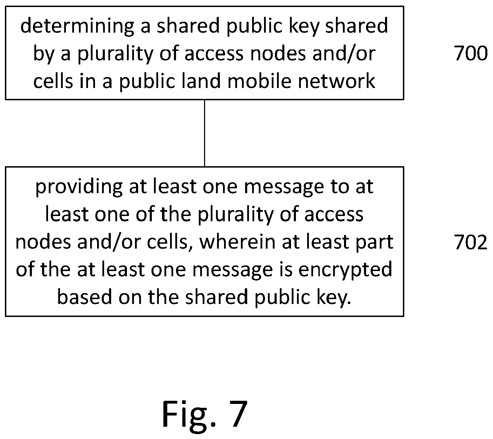

Reference is made to Figure 7, which shows a method performed by a user equipment according to an example embodiment.

At step 700, the method comprises determining a shared public key shared by a plurality of access nodes and/or cells in a public land mobile network.

At step 702, the method comprises providing at least one message to at least one of the plurality of access nodes and/or cells, wherein at least part of the at least one message is encrypted based on the shared public key.

In some example embodiments, a UE may determine whether an access node and/or cell supports PLMN public-key-based protection of an RRC connection setup message - for example an RRC connection request message or an RRC connection setup complete message. Hereinafter, reference will be made to an RRC connection setup complete message. It should however be understood that, in some embodiments, an RRC connection request message may be encrypted and decrypted in a similar manner.

In some example embodiments, an indication of the access node and/or cell capability for decryption of at least part of the RRC connection setup complete message may be broadcasted by the access node/cell. Additionally, or alternatively, the access node and/or cell capability may be indicated to the UE via dedicated signalling, for example when the UE attempts to establish an RRC connection, for example in the RRC connection setup message such as that send at step 610.

In some examples embodiments, the UE may determine whether the access node and/or cell supports decryption of at least part of the RRC connection setup complete message, and perform encryption of the part of the RRC connection setup complete message based on the determination. For example, if the access node and/or cell supports decryption, then the UE may perform encryption of the message; however if the access node and/or cell does not support decryption, then the UE may not encrypt part of the message.

In some example embodiments, if the access node and/or cell supports decryption of at least part of the RRC connection setup complete messages, when the UE transmits a RRC connection setup complete message, the UE may indicate that at least part of the message (for example, all or some parts of the message) is encrypted with the PLMN public key.

In some example embodiments, when the PLMN key is distributed to the UE, the PLMN public key may be associated with an identifier. The identifier may, for example, be an index associated with the PLMN public key. When transmitting the RRC connection setup complete message, the UE may indicate the identifier corresponding to the PLMN public key with which the message has been encrypted.

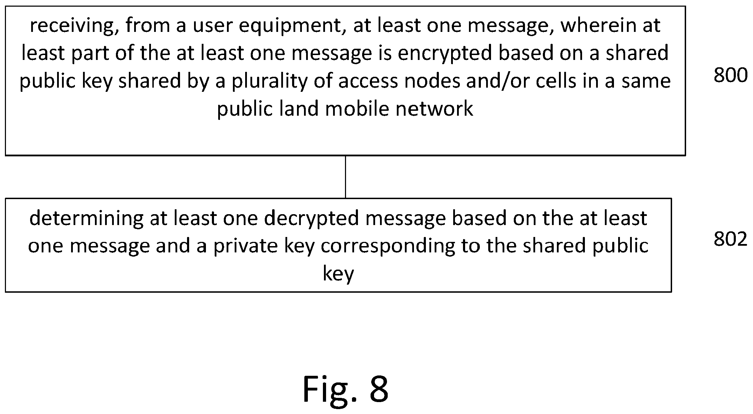

Reference is made to Figure 8, which shows a method performed by an access node such as an eNB, according to an example embodiment.

At step 800, the method comprises receiving, from a user equipment, at least one message, wherein at least part of the at least one message is encrypted based on a shared public key shared by a plurality of access nodes and/or cells in a same public land mobile network.

At step 802, the method comprises determining at least one decrypted message based on the at least one message and a private key corresponding to the shared public key.

In some example embodiments, the access node may receive the RRC connection setup complete message from the UE along with an indication that at least part of the message is encrypted with a PLMN public key. Where the indication that the message is encrypted comprises an identifier associated with the PLMN public key, the access node may identify the key and decrypt the message accordingly. In some examples, the identifier associated with the PLMN public key is not encrypted.

In some example embodiments, the access node may meet certain desired security standards, and thus be considered an access node trusted by the PLMN. In such examples, the access node may store a PLMN private key used to decrypt the messages encrypted with the related shared PLMN public key locally at the access node, to allow the access node to perform the decryption locally.

However, if the access node does not meet the required standards, or is not trusted by the PLMN, then in some example embodiments the access node may not store the PLMN private key locally.

In some example embodiments, the access node may contact a public key decryption service that the PLMN operator hosts in one or more locations within the PLMN.

For example, the access node may transmit the RRC connection setup complete message, wherein at least part of the RRC connection setup complete message is encrypted, along with an indication relating to the PLMN public key provided by the UE, to the public key decryption service. The public key decryption service may decrypt the RRC connection setup complete message and send the decrypted RRC connection setup complete message back to the access node.

Once the RRC connection setup complete message is received and decrypted at the access node (either by local decryption or by using the public key decryption service), the remainder of the RRC procedures may proceed as usual.

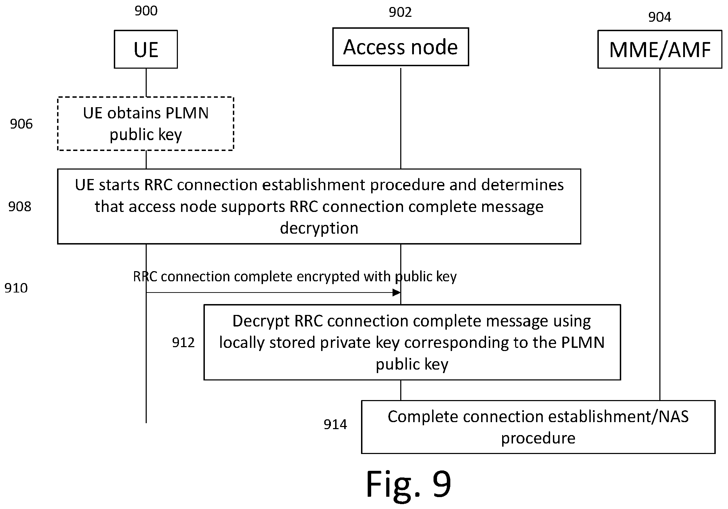

Reference is made to Figure 9, which shows a method according to some example embodiments. In the example of Figure 9, the access node is considered a trusted access node by the PLMN and stores the private key corresponding to the shared public key locally.

In the method shown in Figure 9, the UE 900 has already determined the PLMN public key 906.

As step 908, the UE starts an RRC connection establishment procedure with access node 902. This may be based on the method described previously with reference to Figure 6. The UE may also determine that the access node 902 supports decryption of part of the RRC connection complete message. For example, the UE may receive information broadcasted by the access node before the start of the RRC connection establishment procedure.

At step 910, the UE 900 provides the RRC connection complete message, wherein at least part of the RRC connection complete message is encrypted using the PLMN public key determined at 906, to the access node 902. In some examples, the UE 900 indicates, to the access node 902, an identifier corresponding to the PLMN public key used to perform the encryption.

At step 912, the access node 902 decrypts the encrypted RRC connection complete message using the related PLMN private key stored locally at the access node 902. The related PLMN private key may correspond to the PLMN public key used to encrypt the message. In some examples, where the message includes an identifier corresponding to the PLMN public key, the access node may identify the PLMN private key based on the identifier.

At step 914, the access node and other network entities, such as the mobility management engine (MME) and access management function (AMF) 904, complete the connection establishment and non-access stratum procedures.

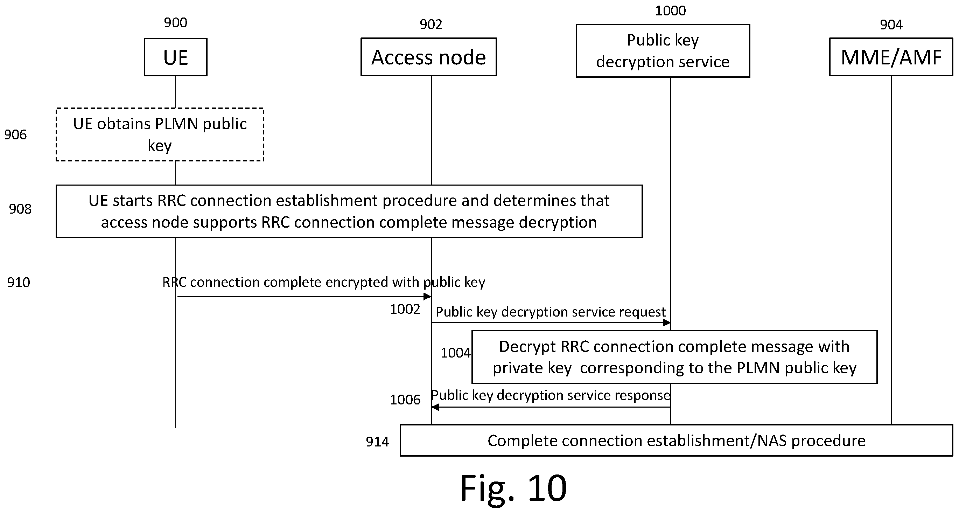

Reference is made to Figure 10, which shows a method according to some example embodiments. In the example of Figure 10, the access node is not considered a trusted access node by the PLMN, and thus must communicate with the public key decryption service.

In the method shown in Figure 10, steps and network entities shared with the method shown in Figure 9 are given the same reference numerals.

As step 908, the UE starts an RRC connection establishment procedure with access node 902. This may be based on the method described previously with reference to Figure 6. The UE may also determine that the access node 902 supports decryption of part of the RRC connection complete message. For example, the UE may receive information broadcasted by the access node before the start of the RRC connection establishment procedure.

At step 910, the UE 900 provides the RRC connection complete message, wherein at least part of the RRC connection complete message is encrypted using the PLMN public key determined at 906, to the access node 902. In some examples, the UE 900 indicates, to the access node 902, an identifier corresponding to the PLMN public key used to perform the encryption.

The access node 902 of Figure 10 is not trusted by the PLMN operator. As such, at step 1002, the access node sends a public key decryption service request to the public key decryption service 1000. The request may include the encrypted RRC connection complete message and the identifier corresponding to the PLMN public key used by the UE to encrypt the RRC connection complete message.

At step 1004, the public key decryption service 1000 decrypts the RRC connection complete message by using a private key determined based on the identifier of the PLMN public key.

At step 1006, the public key decryption service sends a public key decryption service response message to the access node 902. The response message comprises the decrypted RRC connection complete message.

At step 914, the access node and other network entities, such as the mobility management engine (MME) and access management function (AMF) 904, complete the connection establishment and non-access stratum procedures.

In some example embodiments, there is provided an apparatus comprising means for: determining a shared public key shared by a plurality of access nodes and/or cells in a public land mobile network; and providing at least one message to at least one of the plurality of access nodes and/or cells, wherein at least part of the at least one message is encrypted based on the shared public key.

In some example embodiments, there is provided an apparatus comprising at least one processor and at least one memory including computer code for one or more programs, the at least one memory and the computer code configured, with the at least one processor, to cause the apparatus at least to: determine a shared public key shared by a plurality of access nodes and/or cells in a public land mobile network; and provide at least one message to at least one of the plurality of access nodes and/or cells, wherein at least part of the at least one message is encrypted based on the shared public key.

In some example embodiments, there is provided an apparatus comprising means for: receiving, from a user equipment, at least one message, wherein at least part of the at least one message is encrypted based on a shared public key shared by a plurality of access nodes and/or cells in a same public land mobile network; and determining at least one decrypted message based on the at least one message and a private key corresponding to the shared public key.

In some example embodiments, there is provided an apparatus comprising at least one processor and at least one memory including computer code for one or more programs, the at least one memory and the computer code configured, with the at least one processor, to cause the apparatus at least to: receive, from a user equipment, at least one message, wherein at least part of the at least one message is encrypted based on a shared public key shared by a plurality of access nodes and/or cells in a same public land mobile network; and determine at least one decrypted message based on the at least one message and a private key corresponding to the shared public key.

Thus, by providing apparatuses and methods as described in any of the example embodiments, the RRC connection establishment messages sent by the UE to the access node may be encrypted and integrity protected with a PLMN public key. By sharing the PLMN public key across access nodes and/or cells within the PLMN, when the UE moves from a first access node to a second access node in the PLMN, the same key may be used to encrypt the RRC connection establishment messages.

While example embodiments have been described with reference to RRC connection establishment messages, it should be understood that, in some example embodiments, encryption and decryption of part of any type of message may be performed in a similar manner. That is to say, some example embodiments may not be limited to messages sent during RRC connection establishment procedures.

Advantageously, the methods as described herein may be implemented in existing wireless network systems. Furthermore, access nodes may be flexibly "trusted" by the PLMN operator by removing or enabling local storage of the PLMN private key, thus providing an additional layer of network security configuration. It is noted herein that while the above describes example embodiments, there are several variations and modifications which may be made to the disclosed solution without departing from the scope of the present invention.

In general, the various embodiments may be implemented in hardware or special purpose circuitry, software, logic or any combination thereof. Some aspects of the disclosure may be implemented in hardware, while other aspects may be implemented in firmware or software which may be executed by a controller, microprocessor or other computing device, although the disclosure is not limited thereto. While various aspects of the disclosure may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation."

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The embodiments of this disclosure may be implemented by computer software executable by a data processor of the mobile device, such as in the processor entity, or by hardware, or by a combination of software and hardware. Computer software or program, also called program product, including software routines, applets and/or macros, may be stored in any apparatus-readable data storage medium and they comprise program instructions to perform particular tasks. A computer program product may comprise one or more computer-executable components which, when the program is run, are configured to carry out embodiments. The one or more computer-executable components may be at least one software code or portions of it.

Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD. The physical media is a non-transitory media.

The memory may be of any type suitable to the local technical environment and may be implemented using any suitable data storage technology, such as semiconductor based memory devices, magnetic memory devices and systems, optical memory devices and systems, fixed memory and removable memory. The data processors may be of any type suitable to the local technical environment, and may comprise one or more of general purpose computers, special purpose computers, microprocessors, digital signal processors (DSPs), application specific integrated circuits (ASIC), FPGA, gate level circuits and processors based on multi core processor architecture, as non-limiting examples.

Embodiments of the disclosure may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

The scope of protection sought for various embodiments of the disclosure is set out by the independent claims. The embodiments and features, if any, described in this specification that do not fall under the scope of the independent claims are to be interpreted as examples useful for understanding various embodiments of the disclosure.

## Claims

1. An apparatus comprising means for:
determining (700) a shared public key shared by a plurality of access nodes and/or cells in a public land mobile network;
receiving an indication, via dedicated signalling, that at least one access node and/or cell of the plurality of access nodes and/or cells supports decryption, based on the shared public key, of messages; and
based on receiving the indication, providing (702) at least one message to the at least one access node and/or cell of the plurality of access nodes and/or cells, wherein at least part of the at least one message is encrypted based on the shared public key.

2. The apparatus of claim 1, wherein the at least one message comprises at least one of a radio resource control connection request message and a radio resource control connection setup complete message, wherein at least part of the radio resource connection request message and/or the radio resource control connection setup complete message is encrypted using the shared public key.

3. The apparatus according to any preceding claim, wherein the means is for providing the at least one message and an indication that at least part of the at least one message has been encrypted based on the shared public key.

4. The apparatus according to any preceding claim, wherein the means is for providing the at least one message and an identifier associated with the shared public key used for encryption.

5. An apparatus comprising means for:
providing dedicated signalling to a user equipment, the dedicated signalling comprising an indication that the apparatus supports decryption of messages based on a shared public key shared by a plurality of access nodes and/or cells in a public land mobile network; H
receiving (800), from the user equipment, at least one message, wherein at least part of the at least one message is encrypted based on the shared public key; and
determining (802) at least one decrypted message based on the at least one message and a private key corresponding to the shared public key.

6. The apparatus of claim 5, wherein the at least one message comprises at least one of a radio resource control connection request message and a radio resource control complete message, wherein at least part of the radio resource control connection setup message and/or the radio resource control radio resource control complete message is encrypted based on the shared public key.

7. The apparatus of claim 5 or claim 6, wherein the means is for:
receiving the message and an indication that at least part of the at least one message has been encrypted based on the shared public key.

8. The apparatus of any of claims 5 to 7, wherein the means is for:
receiving the at least one message and an identifier associated with the shared public key.

9. The apparatus of claim 8, wherein the means for determining the at least one decrypted message comprises means for performing decryption of the at least one message based on the private key corresponding to the shared public key, wherein the private key is identified by the identifier associated with the shared public key, wherein the private key is stored locally at the apparatus.

10. The apparatus of any of claims 5 to 9, wherein the means for determining the at least one decrypted message is for:
providing, to a network entity, at least one request comprising the at least one message and an indication identifying the shared public key; and
receiving, from the network entity, the at least one decrypted message.

11. A method comprising:
determining (700) a shared public key shared by a plurality of access nodes and/or cells in a public land mobile network;
receiving an indication, via dedicated signalling, that at least one access node and/or cell of the plurality of access nodes and/or cells supports decryption, based on the shared public key, of messages; and
based on receiving the indication, providing (702) at least one message to the at least one access node and/or cell of the plurality of access nodes and/or cells, wherein at least part of the at least one message is encrypted based on the shared public key.

12. A method comprising:
providing dedicated signalling to a user equipment, the dedicated signalling comprising an indication that the apparatus supports decryption of messages based on a shared public key shared by a plurality of access nodes and/or cells in a public land mobile network;
receiving (800), from the user equipment, at least one message, wherein at least part of the at least one message is encrypted based on the shared public key; and
determining (802) at least one decrypted message based on the at least one message and a private key corresponding to the shared public key.

13. A computer program comprising computer executable code which when run on at least one processor is configured to:
determine (700) a shared public key shared by a plurality of access nodes and/or cells in a public land mobile network;
receive an indication, via dedicated signalling, that at least one access node and/or cell of the plurality of access nodes and/or cells supports decryption, based on the shared public key, of messages; and
based on receiving the indication, provide (702) at least one message to the at least one access node and/or cell of the plurality of access nodes and/or cells, wherein at least part of the at least one message is encrypted based on the shared public key.

14. A computer program comprising computer executable code which when run on at least one processor is configured to:
provide dedicated signalling to a user equipment, the dedicated signalling comprising an indication that the apparatus supports decryption of messages based on a shared public key shared by a plurality of access nodes and/or cells in a public land mobile network;
receive (800), from the user equipment, at least one message, wherein at least part of the at least one message is encrypted based on the shared public key; and
determine (802) at least one decrypted message based on the at least one message and a private key corresponding to the shared public key.

## Patentansprüche

1. Vorrichtung, die Mittel für Folgendes umfasst:
Bestimmen (700) eines gemeinsam verwendeten öffentlichen Schlüssels, der von einer Vielzahl von Zugangsknoten und/oder Zellen in einem öffentlichen terrestrischen Mobilfunknetzwerk gemeinsam verwendet wird;
Empfangen einer Anzeige via eine dedizierte Signalisierung, dass mindestens ein Zugangsknoten und/oder mindestens eine Zelle der Vielzahl von Zugangsknoten und/oder Zellen auf Basis des gemeinsam verwendeten öffentlichen Schlüssels eine Entschlüsselung von Nachrichten unterstützt; und
auf Basis des Empfangens der Anzeige Bereitstellen (702) von mindestens einer Nachricht für den mindestens einen Zugangsknoten und/oder die mindestens eine Zelle der Vielzahl von Zugangsknoten und/oder Zellen, wobei mindestens ein Teil der mindestens einen Nachricht auf Basis des gemeinsam verwendeten öffentlichen Schlüssels verschlüsselt ist.

2. Vorrichtung nach Anspruch 1, wobei die mindestens eine Nachricht mindestens eines von einer Funkressourcensteuerverbindunganforderungsnachricht und einer Funkressourcensteuerverbindungsaufbauabschlussnachricht umfasst, wobei mindestens ein Teil der Funkressourcen verbindungsanforderungsnachricht und/oder der Funkressourcensteuerverbindungsaufbauabschlussnachricht unter Verwendung des gemeinsam verwendeten öffentlichen Schlüssels verschlüsselt ist.

3. Vorrichtung nach einem der vorhergehenden Ansprüche, wobei die Mittel dem Bereitstellen der mindestens einen Nachricht und einer Anzeige, dass mindestens ein Teil der mindestens einen Nachricht auf Basis des gemeinsam verwendeten Schlüssels verschlüsselt wurde, dient.

4. Vorrichtung nach einem der vorhergehenden Ansprüche, wobei die Mittel dem Bereitstellen der mindestens einen Nachricht und einer Kennung, die mit dem gemeinsam verwendeten öffentlichen Schlüssel verknüpft ist, der für die Verschlüsselung verwendet wird, dient.

5. Vorrichtung, die Mittel für Folgendes umfasst:
Bereitstellen einer dedizierten Signalisierung für eine Teilnehmereinrichtung, wobei die dedizierte Signalisierung eine Anzeige umfasst, dass die Vorrichtung eine Entschlüsselung von Nachrichten auf Basis eines gemeinsam verwendeten öffentlichen Schlüssels unterstützt, der von einer Vielzahl von Zugangsknoten und/oder Zellen in einem öffentlichen terrestrischen Mobilfunknetzwerk gemeinsam verwendet wird;
Empfangen (800) von mindestens einer Nachricht von der Teilnehmereinrichtung, wobei mindestens ein Teil der mindestens einen Nachricht auf Basis des gemeinsam verwendeten öffentlichen Schlüssels verschlüsselt ist; und
Bestimmen (802) von mindestens einer entschlüsselten Nachricht auf Basis der mindestens einen Nachricht und einem privaten Schlüssel, der dem gemeinsam verwendeten öffentlichen Schlüssel entspricht.

6. Vorrichtung nach Anspruch 5, wobei die mindestens einen Nachricht mindestens eines von einer Funkressourcensteuerverbindunganforderungsnachricht und einer Funkressourcensteuer abschlussnachricht umfasst, wobei mindestens ein Teil der Funkressourcensteuerverbindungsaufbaunachricht und/oder der Funkressourcensteuerungsfunkressourcensteuerungsabschlussnachr icht unter Verwendung des gemeinsam verwendeten öffentlichen Schlüssels verschlüsselt ist.

7. Vorrichtung nach Anspruch 5 oder Anspruch 6, wobei die Mittel Folgendem dienen:
Empfangen der Nachricht und einer Anzeige, dass mindestens ein Teil der mindestens einen Nachricht auf Basis des gemeinsam verwendeten Schlüssels verschlüsselt wurde.

8. Vorrichtung nach einem der Ansprüche 5 bis 7, wobei die Mittel Folgendem dienen:
Empfangen der mindestens einen Nachricht und einer Kennung, die mit dem gemeinsam verwendeten öffentlichen Schlüssel verknüpft ist.

9. Vorrichtung nach Anspruch 8, wobei die Mittel zum Bestimmen der mindestens einen entschlüsselten Nachricht Mittel zum Durchführen einer Entschlüsselung der mindestens einen Nachricht auf Basis des privaten Schlüssels, der dem gemeinsam verwendeten öffentlichen Schlüssel entspricht, umfasst, wobei der private Schlüssel durch die Kennung, die mit dem gemeinsam verwendeten öffentlichen Schlüssel verknüpft ist, identifiziert wird, wobei der private Schlüssel lokal in der Vorrichtung gespeichert ist.

10. Vorrichtung nach einem der Ansprüche 5 bis 9, wobei die Mittel zum Bestimmen der mindestens einen entschlüsselten Nachricht Folgendem dienen:
Bereitstellen von mindestens einer Anforderung, die die mindestens eine Nachricht und eine Anzeige umfasst, die den gemeinsam verwendeten öffentlichen Schlüssel identifiziert, für eine Netzwerkentität; und
Empfangen der mindestens einen entschlüsselten Nachricht von der Netzwerkentität.

11. Verfahren, das Folgendes umfasst:
Bestimmen (700) eines gemeinsam verwendeten öffentlichen Schlüssels, der von einer Vielzahl von Zugangsknoten und/oder Zellen in einem öffentlichen terrestrischen Mobilfunknetzwerk gemeinsam verwendet wird;
Empfangen einer Anzeige via eine dedizierte Signalisierung, dass mindestens ein Zugangsknoten und/oder mindestens eine Zelle der Vielzahl von Zugangsknoten und/oder Zellen auf Basis des gemeinsam verwendeten öffentlichen Schlüssels eine Entschlüsselung von Nachrichten unterstützt; und
auf Basis des Empfangens der Anzeige Bereitstellen (702) von mindestens einer Nachricht für den mindestens einen Zugangsknoten und/oder die mindestens eine Zelle der Vielzahl von Zugangsknoten und/oder Zellen, wobei mindestens ein Teil der mindestens einen Nachricht auf Basis des gemeinsam verwendeten öffentlichen Schlüssels verschlüsselt ist.

12. Verfahren, das Folgendes umfasst:
Bereitstellen einer dedizierten Signalisierung für eine Teilnehmereinrichtung, wobei die dedizierte Signalisierung eine Anzeige umfasst, dass die Vorrichtung eine Entschlüsselung von Nachrichten auf Basis eines gemeinsam verwendeten öffentlichen Schlüssels unterstützt, der von einer Vielzahl von Zugangsknoten und/oder Zellen in einem öffentlichen terrestrischen Mobilfunknetzwerk gemeinsam verwendet wird;
Empfangen (800) von mindestens einer Nachricht von der Teilnehmereinrichtung, wobei mindestens ein Teil der mindestens einen Nachricht auf Basis des gemeinsam verwendeten öffentlichen Schlüssels verschlüsselt ist; und
Bestimmen (802) von mindestens einer entschlüsselten Nachricht auf Basis der mindestens einen Nachricht und einem privaten Schlüssel, der dem gemeinsam verwendeten öffentlichen Schlüssel entspricht.

13. Computerprogramm, das einen computerausführbaren Code umfasst, der, wenn er auf mindestens einem Prozessor läuft, zu Folgendem ausgelegt ist:
Bestimmen (700) eines gemeinsam verwendeten öffentlichen Schlüssels, der von einer Vielzahl von Zugangsknoten und/oder Zellen in einem öffentlichen terrestrischen Mobilfunknetzwerk gemeinsam verwendet wird;
Empfangen einer Anzeige via eine dedizierte Signalisierung, dass mindestens ein Zugangsknoten und/oder mindestens eine Zelle der Vielzahl von Zugangsknoten und/oder Zellen auf Basis des gemeinsam verwendeten öffentlichen Schlüssels eine Entschlüsselung von Nachrichten unterstützt; und
auf Basis des Empfangens der Anzeige Bereitstellen (702) von mindestens einer Nachricht für den mindestens einen Zugangsknoten und/oder die mindestens eine Zelle der Vielzahl von Zugangsknoten und/oder Zellen, wobei mindestens ein Teil der mindestens einen Nachricht auf Basis des gemeinsam verwendeten öffentlichen Schlüssels verschlüsselt ist.

14. Computerprogramm, das einen computerausführbaren Code umfasst, der, wenn er auf mindestens einem Prozessor läuft, zu Folgendem ausgelegt ist:
Bereitstellen einer dedizierten Signalisierung für eine Teilnehmereinrichtung, wobei die dedizierte Signalisierung eine Anzeige umfasst, dass die Vorrichtung eine Entschlüsselung von Nachrichten auf Basis eines gemeinsam verwendeten öffentlichen Schlüssels unterstützt, der von einer Vielzahl von Zugangsknoten und/oder Zellen in einem öffentlichen terrestrischen Mobilfunknetzwerk gemeinsam verwendet wird;
Empfangen (800) von mindestens einer Nachricht von der Teilnehmereinrichtung, wobei mindestens ein Teil der mindestens einen Nachricht auf Basis des gemeinsam verwendeten öffentlichen Schlüssels verschlüsselt ist; und
Bestimmen (802) von mindestens einer entschlüsselten Nachricht auf Basis der mindestens einen Nachricht und einem privaten Schlüssel, der dem gemeinsam verwendeten öffentlichen Schlüssel entspricht.

## Revendications

1. Appareil comprenant des moyens pour :
déterminer (700) une clé publique partagée qui est partagée par une pluralité de noeuds d'accès et/ou de cellules dans un réseau mobile terrestre public ;
recevoir une indication, via une signalisation dédiée, selon laquelle au moins un noeud d'accès et/ou une cellule de la pluralité de noeuds d'accès et/ou de cellules prend en charge le déchiffrement des messages sur la base de la clé publique partagée ; et
sur la base de la réception de l'indication, fournir (702) au moins un message à l'au moins un noeud d'accès et/ou une cellule de la pluralité de noeuds d'accès et/ou de cellules, dans lequel au moins une partie de l'au moins un message est chiffrée sur la base de la clé publique partagée.

2. Appareil selon la revendication 1, dans lequel l'au moins un message comprend au moins un parmi un message de demande de connexion de contrôle de ressources radio et un message d'établissement complet de connexion de contrôle de ressources radio, dans lequel au moins une partie du message de demande de connexion de ressources radio et/ou du message d'établissement complet de connexion de contrôle de ressources radio est chiffrée à l'aide de la clé publique partagée.

3. Appareil selon l'une des revendications précédentes, dans lequel les moyens sont destinés à fournir l'au moins un message et une indication selon laquelle l'au moins une partie de l'au moins un message a été chiffrée sur la base de la clé publique partagée.

4. Appareil selon l'une des revendications précédentes, dans lequel les moyens sont destinés à fournir l'au moins un message et un identifiant associé à la clé publique partagée utilisée pour le chiffrement.

5. Appareil comprenant des moyens pour :
fournir une signalisation dédiée à un équipement utilisateur, la signalisation dédiée comprenant une indication selon laquelle l'appareil prend en charge le déchiffrement des messages sur la base d'une clé publique partagée qui est partagée par une pluralité de noeuds d'accès et/ou de cellules dans un réseau mobile terrestre public ;
recevoir (800), de l'équipement utilisateur, au moins un message, dans lequel l'au moins une partie de l'au moins un message est chiffrée sur la base de la clé publique partagée ;
déterminer (802) au moins un message déchiffré sur la base de l'au moins un message et d'une clé privée correspondant à la clé publique partagée.

6. Appareil selon la revendication 5, dans lequel l'au moins un message comprend au moins un parmi un message de demande de connexion de contrôle de ressources radio et un message complet de contrôle de ressources radio, dans lequel au moins une partie du message d'établissement de connexion de contrôle de ressources radio et/ou du message complet de contrôle de ressources radio de contrôle de ressources radio est chiffrée sur la base de la clé publique partagée.

7. Appareil selon la revendication 5 ou la revendication 6, dans lequel les moyens sont destinés à :
recevoir le message et une indication selon laquelle l'au moins une partie de l'au moins un message a été chiffrée sur la base de la clé publique partagée.

8. Appareil selon l'une des revendications 5 à 7, dans lequel les moyens sont destinés à :
recevoir l'au moins un message et un identifiant associé à la clé publique partagée.

9. Appareil selon la revendication 8, dans lequel les moyens pour déterminer l'au moins un message déchiffré comprennent des moyens pour effectuer le déchiffrement de l'au moins un message sur la base de la clé privée correspondant à la clé publique partagée, dans lequel la clé privée est identifiée par l'identifiant associé à la clé publique partagée, dans lequel la clé privée est stockée localement sur l'appareil.

10. Appareil selon l'une des revendications 5 à 9, dans lequel les moyens pour déterminer l'au moins un message déchiffré sont destinés à :
fournir, à une entité de réseau, au moins une demande comprenant l'au moins un message et une indication identifiant la clé publique partagée ; et
recevoir, de l'entité de réseau, l'au moins un message déchiffré.

11. Procédé comprenant les étapes suivantes :
déterminer (700) une clé publique partagée qui est partagée par une pluralité de noeuds d'accès et/ou de cellules dans un réseau mobile terrestre public ;
recevoir une indication, via une signalisation dédiée, selon laquelle au moins un noeud d'accès et/ou une cellule de la pluralité de noeuds d'accès et/ou de cellules prend en charge le déchiffrement des messages sur la base de la clé publique partagée ; et
sur la base de la réception de l'indication, fournir (702) au moins un message à l'au moins un noeud d'accès et/ou une cellule de la pluralité de noeuds d'accès et/ou de cellules, dans lequel au moins une partie de l'au moins un message est chiffrée sur la base de la clé publique partagée.

12. Procédé comprenant les étapes suivantes :
fournir une signalisation dédiée à un équipement utilisateur, la signalisation dédiée comprenant une indication selon laquelle l'appareil prend en charge le déchiffrement des messages sur la base d'une clé publique partagée qui est partagée par une pluralité de noeuds d'accès et/ou de cellules dans un réseau mobile terrestre public ;
recevoir (800), de l'équipement utilisateur, au moins un message, dans lequel au moins une partie de l'au moins un message est chiffrée sur la base de la clé publique partagée ; et
déterminer (802) au moins un message déchiffré sur la base de l'au moins un message et d'une clé privée correspondant à la clé publique partagée.

13. Programme informatique comprenant un code exécutable par ordinateur qui, lorsqu'il est exécuté sur au moins un processeur, est configuré pour :
déminer (700) une clé publique partagée qui est partagée par une pluralité de noeuds d'accès et/ou de cellules dans un réseau mobile terrestre public ;
recevoir une indication, via une signalisation dédiée, selon laquelle au moins un noeud d'accès et/ou une cellule de la pluralité de noeuds d'accès et/ou de cellules prend en charge le déchiffrement des messages sur la base de la clé publique partagée ; et
sur la base de la réception de l'indication, fournir (702) au moins un message à l'au moins un noeud d'accès et/ou une cellule de la pluralité de noeuds d'accès et/ou de cellules, dans lequel au moins une partie de l'au moins un message est chiffrée sur la base de la clé publique partagée.

14. Programme informatique comprenant un code exécutable par ordinateur qui, lorsqu'il est exécuté sur au moins un processeur, est configuré pour :
fournir une signalisation dédiée à un équipement utilisateur, la signalisation dédiée comprenant une indication selon laquelle l'appareil prend en charge le déchiffrement des messages sur la base d'une clé publique partagée qui est partagée par une pluralité de noeuds d'accès et/ou de cellules dans un réseau mobile terrestre public ;
recevoir (800), de l'équipement utilisateur, au moins un message, dans lequel au moins une partie de l'au moins un message est chiffrée sur la base de la clé publique partagée ; et
déterminer (802) au moins un message déchiffré sur la base de l'au moins un message et d'une clé privée correspondant à la clé publique partagée.
